# EUROPEAN PATENT APPLICATION

(11) **EP 1 720 356 A1**
(43) Date of publication of application: **08.11.2006**
(21) Application number: 05009718.7
(22) Date of filing: 03.05.2005
(51) Int. Cl.: H04N 7/26

(54) **A frequency selective video compression**

(71) Applicant: MATSUSHITA ELECTRIC INDUSTRIAL CO., LTD., Kadoma-shi, Osaka 571-8501 (JP)
(72) Inventor: Schuur, Bernhard, 55128 Mainz (DE); Wedi, Thomas, Dr., 64823 Gross-Umstadt (DE)
(74) Representative: Grünecker, Kinkeldey, Stockmair & Schwanhäusser Anwaltssozietät

(57) **Abstract**

The present the present invention relates to an improved encoding of video data. After transform of the pixel data into the frequency domain, only individual frequencies are selected by suppressing the remaining transform coefficients, wherein the selected frequency is altered in accordance with a predefined rule. By selecting only individual non-zero transform coefficients, the coding efficiency can be increased. By varying the selected frequency the perceived image quality of the reconstructed image at the decoder side is not adversely affected.

## Description

The present invention relates to the compression of video data. Particularly, the present invention relates to a method and apparatus for compressing video data by employing a frequency selective encoding scheme.

Video data is being adopted in increasing numbers of applications, ranging from video-telephoning and video-conferencing to DVD and digital television. When a video data is being transmitted or recorded, a substantial amount of data has to be sent through conventional transmission channels of limited available frequency bandwidth or has to be stored on conventional storage media of limited data capacity. In order to transmit and store digital data on conventional channels/media, it is inevitable to compress or reduce the volume of digital data.

For the compression of video data, a plurality of video encoding standards has been developed. Such video standards are, for instance, ITU-T standards denoted with H.26x and ISO/IEC standards denoted with MPEG-x. The most up-to-date and advanced video encoding standard is currently the standard denoted as H.264 or MPEG-4 AVC.

The encoding approach underlying most of these standards consists of the following main stages:
(a) Dividing each individual video frame into blocks of pixels in order to subject each video frame to data compression at a block level.
(b) Reducing spatial redundancies within a video frame by applying each block of video data to a transform from the spatial domain into the frequency domain.
(c) Quantizing the resulting transform coefficients.
(d) Entropy encoding the quantized transform coefficients.
(e) Exploiting temporal dependencies between blocks of subsequent frames in order to only transmit changes between subsequent frames. This is accomplished by employing a motion estimation/compensation technique.

Among the various video compression techniques, the so-called hybrid coding technique is known to be the most effective. The hybrid coding technique combines temporal and spatial compression techniques together with statistical coding. Most hybrid techniques employ motion-compensated Differential Pulse Code Modulation (DPCM), two-dimensional Discrete Cosine Transform (DCT), quantization of DCT coefficients, and a Variable Length Coding (VLC).

The motion compensated DPCM is a process of determining the movement of an image object between a current frame and a previous frame, and predicting the current frame according to the determined motion to produce differential signals representing the differences between the current frame and its prediction.

It is a particular approach of current video coding standards that the image information is transformed from the spatial domain into the frequency domain. Each of the transform coefficients in the frequency domain represents a particular spatial frequency.

Image compression is achieved in the frequency domain by representing the image content- without any visible quality degradation - by only employing few transform coefficients. A natural image content is mostly concentrated in the coefficients of the lower frequency domain. Further, frequency parts for which the human eye is less sensitive can be removed or reduced in order to lower the amount of coded data.

The coding efficiency of current video coding standards like MPEG-1, MPEG-2, MPEG-4, H.263 and H.264/AVC highly depends on the amount of transform coefficients that have to be encoded. An efficient encoding approach has to cope with two conflicting aims. First, a high compression ratio can only be achieved by reducing the resulting amount of data to a minimum. Second, a high picture quality can only be achieved by encoding as many frequency components as possible.

The present invention aims to further improve the coding efficiency.

This is achieved by the features as set forth in the independent claims.

Preferred embodiments are the subject matter of dependent claims.

According to a first aspect of the present invention, a method for encoding video data is provided. The method transforms the pixels of an image area into transform coefficients in the frequency domain. From the transform coefficients, at least one transform coefficient of a predefined frequency is selected by suppressing the remaining transform coefficients wherein the predetermined frequency is altered in predefined intervals.

According to a further aspect of the present invention, an encoding apparatus for encoding video data of an input image is provided. The encoding apparatus comprises a transformer for transforming the pixels of an image area into transform coefficients in the frequency domain. A selector selects at least one transform coefficient of a predetermined frequency by suppressing the remaining transform coefficients wherein the predetermined frequency is altered in predefined intervals.

In order to enable a more efficient data encoding, it is the particular approach of the present invention to alternately select a particular frequency from all of the frequencies which are represented by the transform coefficients and to suppress the remaining frequencies. Accordingly, different frequencies are selected and maintained from all of the frequencies as non-zero coefficients over a predetermined period of time such that the missing information becomes less visible for the human visual system. In this manner, the compression ratio can be increased without adversely affecting the resulting picture quality.

Preferably, the transform coefficients for an image area are divided into plural segments such that a segment comprises plural neighboring frequencies. By selecting a particular segment, a particular frequency portion of plural frequencies can be selected in a simple manner.

Preferably, said selection process selects a predefined number of predetermined frequencies of a transformed image area. In this manner, a trade-off between the achieved compression rate and the impact on the perceived image quality can be set appropriately in a simple manner.

Preferably, a single transform coefficient or segment is selected by the predetermined frequency. In this manner, the resulting image quality degradation can be controlled and kept to a minimum by appropriately selecting a particular frequency.

Preferably, said predetermined transform coefficient is altered from frame to frame or from image area to image area. In this manner, a constant change of the predetermined selection frequency can be implemented in a simple manner.

Preferably, said predetermined frequency is altered in accordance with a predefined sequence of frequencies. Accordingly, the frequency alteration can be achieved in a simple manner.

Preferably, the predefined order includes all frequencies of the transformed image area. Consequently, the successive application of different selection frequencies ensures that all frequencies are transmitted at least once within a given time period.

Preferably, the predefined order only includes a sub-set of all frequencies. In this manner, an efficient coding with a lower impact on the perceived image quality can be achieved by only including important frequency components into the predetermined order.

Preferably, the frequency selection, i.e. the alteration of the predetermined selection frequency, is performed adaptively. In this manner, the impact on the perceived image quality by the encoding of selected frequencies can be reduced considerably.

Preferably, the predefined selection frequency is adapted to the image content of the respective image area. Accordingly, those frequencies are selected which contribute most to the image contents. Consequently, the image quality of the decoded image can be improved without increasing the amount of data to be encoded.

Preferably, the predetermined frequency is set adaptive to the presence or size of non-zero transform coefficients. Accordingly, the selection is based on those frequency components, which contribute most to the image representation in the frequency domain. In this manner, the image quality can be controlled in a simple manner.

Preferably, the proportion of predetermined low frequencies and high frequencies is set adaptively depending on the frequency characteristic of the transform coefficients of the respective image area. By mandatory transmitting a low frequency part and setting the contribution of low and high frequencies adaptively, the image quality can be controlled in a simple and efficient manner.

Preferably, only a frequency, which exceeds a predefined threshold value is set as the predetermined frequency. The important frequency components can thus be selected in a simple and efficient manner.

Preferably, the threshold value for setting the predetermined frequencies is set adaptively. In this manner, the setting of predetermined frequencies can be simply adapted, for instance, to the image content, to the available data rate, etc.

Preferably, the segments grouping neighboring frequencies include the same number of transform coefficients. According to an alternative embodiment, the segments of an image area include a different number of transform coefficients. Accordingly, the proportion of a particular frequency component can be increased or lowered in a simple manner.

According to preferred embodiment, that segment including the lowest frequency is set largest such that the lower frequency is given a higher importance.

The above and other objects and features of the present invention will become more apparent from the following description and preferred embodiments given in conjunction with the accompanying drawings, in which:
- Fig.1: schematically illustrates in block diagram form a configuration of a conventional hybrid video encoder,
- Fig. 2: schematically illustrates in block diagram form the configuration of a conventional hybrid video decoder,
- Fig. 3: illustrates schematically the division of an input image into a plurality of blocks of uniform size for encoding purposes,
- Fig. 4a: illustrates an example of four neighboring transform coefficient blocks before quantization,
- Fig. 4b: illustrates the transform coefficients of Fig. 4a after quantization,
- Fig. 5: illustrates an example for a modified configuration of the hybrid video encoder of Fig. 2, and
- Fig. 6: is a flow chart illustrating the process of compressing video data in accordance with the present invention.

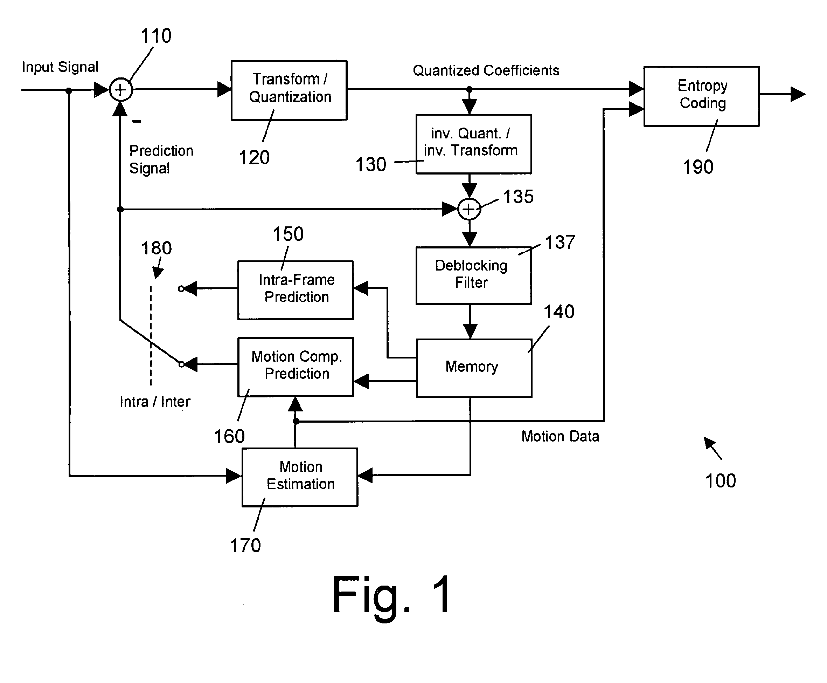

Referring to Fig. 1, an example of a hybrid video encoder is illustrated. The video encoder, generally denoted by reference numeral 100, comprises a subtractor 110 for determining differences between a current video image (input signal) and a prediction signal of the current image which is based on previously encoded images. A transform and quantization unit 120 transforms the resulting prediction error from the spatial domain to the frequency domain and quantizes the obtained transform coefficients. An entropy coding unit 190 entropy encodes the quantized transform coefficients.

The operation of the video encoder of Fig. 1 is as follows. The encoder employs a Differential Pulse Code Modulation (DPCM) approach which only transmits differences between the subsequent images of an input video sequence. These differences are determined in subtractor 110, which receives the video images to be encoded in order to subtract a prediction of the current images therefrom.

The prediction is based on the decoding result ("the locally decoded image") of previously encoded images on the encoder side. This is accomplished by a decoding unit incorporated into video encoder 100. The decoding unit performs the encoding steps in reverse manner. An inverse quantization and inverse transform unit 130 de-quantizes the quantized coefficients and applies an inverse transform to the de-quantized coefficients. In adder 135, the decoded differences are added to the decoded prediction error to form the locally decoded image.

The motion compensated DPCM, conducted by the video encoder of Fig. 1, predicts a current field or frame from corresponding previous field or frame data. This prediction is based on an estimation of motion between current and previous fields or frames. The motion estimation is determined in terms of two-dimensional motion vectors, representing a displacement of pixels between the current and previous frames. Usually, motion estimation is performed on a block-by-block basis, wherein a block in a current frame is compared with blocks in previous frames until a best match is determined. Based on the comparison result, a displacement vector for each block of a current frame is estimated.

This is accomplished by a motion estimator unit 170, receiving the current input signal and the locally decoded images.

Based on the results of motion estimation, motion compensation performed by motion compensation prediction unit 160 providing a prediction utilizing the determined motion vector. The information contained in a prediction error block, representing the differences between the current and the predicted block, is then transformed into the transform coefficients by transform unit 120. Generally, a two-dimensional Discrete Cosine Transform (DCT) is employed for the transformation.

In accordance with the H.264 / AVC standard, the input image is divided into macro blocks. The macro blocks are encoded applying an "Intra" or "Inter" encoding mode. In Inter mode, a macro block is predicted by employing motion compensation as previously described. In Intra mode, the prediction signal is set to zero, but the video encoding standard H.264/AVC additionally employs a prediction scheme based on already encoded macro blocks of the same image in order to predict subsequent macro blocks.

Only Intra-encoded images (1-type images) can be decoded without reference to any previously decoded image. The I-type images provide error resilience for the encoded video sequence. Further, entry points into bit streams of encoded data are provided by the 1-type images in order to enable a random access, i.e. to access I-type images within the sequence of encoded video images. A switch between Intra-mode, i.e. a processing by Intra-frame prediction unit 150, and Inter-mode, i.e. a processing by motion compensation prediction unit 160, is controlled by Intra/Inter switch 180.

Further, a de-blocking filter 137 may be provided in order to reduce the presence of blocking effects in the locally decoded image.

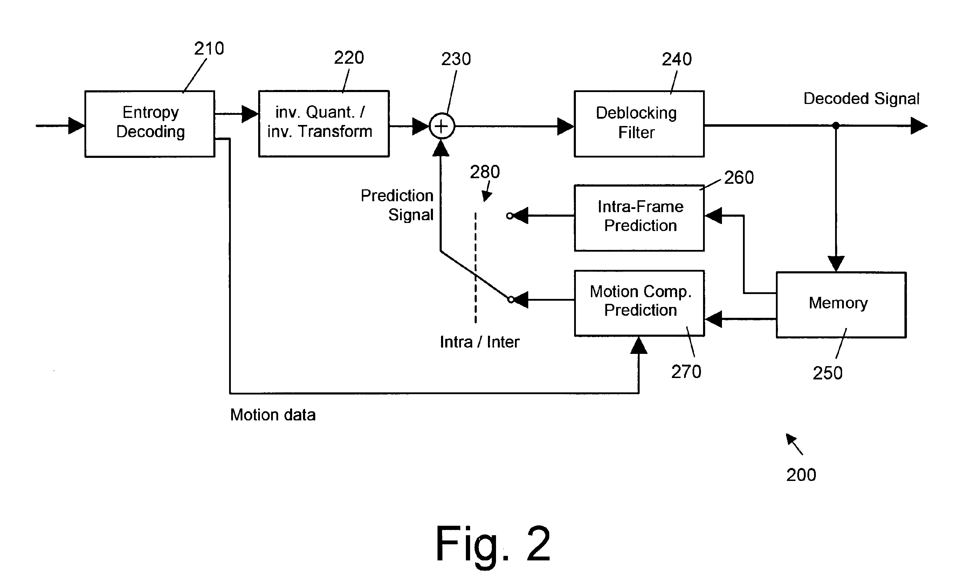

For reconstructing the encoded images at the decoder side, the encoding process is applied in reverse manner. A schematic block diagram, illustrating the configuration of the corresponding decoder, is shown in Fig. 2.

In decoder 200 of Fig. 2, first the entropy encoding is reversed in entropy decoding unit 210. The entropy decoded coefficients are submitted to an inverse quantizer and inverse transformer 220 and the motion data are submitted to motion compensation prediction unit 270. The quantized coefficient data are subjected to the inverse quantization and inverse transform unit 220. The reconstructed image block containing prediction differences is added by adder 230 to the prediction signal stemming from the motion compensation prediction unit 270 in Inter-mode or stemming from an Intra-frame prediction unit 260 in Intra-mode. The resulting image may be applied to a de-blocking filter 240 and the decoded signal is stored in memory 250 to be applied to prediction units 260, 270.

The coding efficiency of the above coding approach used in current video coding standard like MPEG-1, MPEG-2, MPEG-4, H.263, H.264/AVC highly depends on the amount of non-zero transform coefficients to be encoded. The number of non-zero coefficients depends on the picture content of the respective macro block of the residual frame.

The number of bits required for encoding a macro block is reduced by quantizing the transform coefficients. The transform coefficients resulting from the quantization process are encoded and stored on a recording medium or transmitted to the decoder side.

Small image content changes between subsequent images are often reflected by a large number of quantized high frequency transform coefficients, but only result in hardly perceivable image quality improvements in the reconstructed image. Such minor changes are almost not noticeable for the human eye. Consequently, the compression of the video data can be increased by suppressing the respective transform coefficients (i.e. frequencies in the frequency domain) without adversely affecting the resulting image quality.

For this purpose, it is the particular approach of the present invention to only maintain individual frequency components from the frequency domain while suppressing the remaining frequency components of the transformed image area. In particular, only a small number of transform coefficients is maintained as non-zero coefficients while the remaining transform coefficients are prevented from contributing to the image reconstruction and set to zero. To reduce the impact of this reduction on the final image quality, the maintained frequency is altered consecutively.

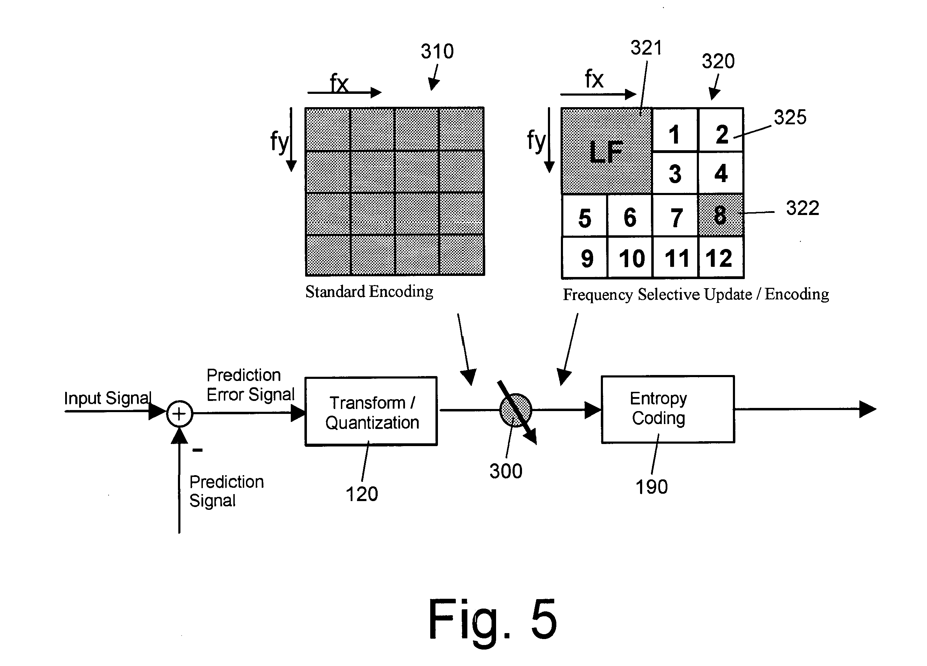

An example implementation of the present invention is illustrated in Fig. 5 for a predictive encoding scheme. A relevant part of the encoding apparatus already described in detail in connection with Fig. 1 is also shown in Fig. 5. Identical processing units are denoted by the same reference numerals.

The prediction error signal is applied to transform/quantization unit 120 and transformed into the frequency domain. The resulting transform coefficients are quantized. Before applying the quantized coefficients to entropy encoding in entropy coding unit 190, only particular non-zero transform coefficients or at least a single coefficient are selected by selector 300 to be maintained and not set to zero. The entropy encoding unit 190 scans and encodes all coefficients of a block. An improved coding efficiency is achieved by increasing the proportion of zero coefficients.

It is to be noted that the application of the frequency selection after quantization of the transform coefficients is only one possible embodiment. In accordance with another embodiment, the quantization stage is not required. Alternatively, the quantization stage is applied after performing the frequency selection or the quantization and frequency selection steps are combined into a single step, for instance by implementing and varying the quantization matrix accordingly. In this manner, the image content is concentrated to particular frequency components in accordance with a predefined selection scheme.

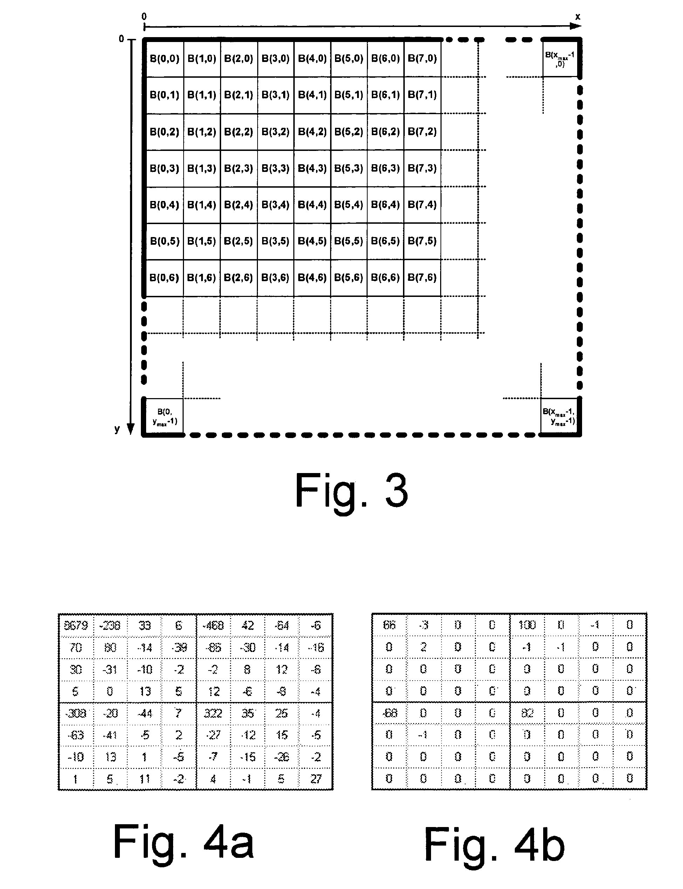

Most coding standards employ a block based encoding using a block raster as illustrated in Fig. 3. The present invention is not limited to a block based encoding approach. The processing steps may also be performed on an image area basis having a different size and/or form, for instance, based on individual image objects or a complete image.

The coefficients resulting from the transform and quantization steps are illustrated in Fig. 4. Fig. 4a illustrates by way of example four adjacent blocks of transform coefficients. Each of the illustrated blocks has a size of 4x4 transform coefficients.

After quantization, most of the transform coefficients are reduced to zero as can be seen in Fig. 4b. For each of the blocks only several non-zero coefficients remain. In the illustrated example, all blocks of transform coefficients include a large non-zero low frequency coefficient (top, left hand coefficient in each of the blocks of Fig. 4b), while the remaining coefficients are only of a small size.

The selection of particular frequencies from the quantization stage can be performed by selecting particular of the resulting non-zero coefficients. Alternatively, the selection process can be based on a "segment" level. The segments 310 shown in Fig. 5 divide the quantized frequency coefficients output from quantizer 120 into a plurality of segments 310. Each segment 310 includes a plurality of neighboring frequency coefficients. Selector 300 will select or discard all of the quantized transform coefficients of one segment at the same time.

As already described above, the present invention is not limited to a selection of quantized transform coefficients as described in connection with the illustrated example. The present invention may also be applied directly to the transform coefficients without or included into the quantization stage.

The following description will mainly refer to segments. However, without explicitly mentioning the alternative use of individual transform coefficients instead of segments, a transform coefficient can be used in the same manner.

The particular implementation example illustrated in Fig. 5 divides the quantized transform coefficients into segments 310 before applying the selection and entropy encoding stages. Selector 300 selects individual segments from all quantized transform coefficients. As illustrated in Fig. 5, segment no. 8 (reference numeral 322) is selected to be maintained from all high frequency segments 320.

In the illustrated example, four low frequency segments are combined to form a particular low frequency segment 320 (denoted LF) of a larger size. These low frequencies are preferably maintained in any case to ensure a certain level of conformity within the original input signal.

Apart from the frequency coefficients of the selected segments 321 and 322, all other segments 325 are discarded and the respective transform coefficients are not submitted to the entropy encoding stage 190.

A skilled person is aware that the use of a particular low frequency segment 321 is only a preferred embodiment and not limiting the present invention. A similar "larger segment" may be used for any other frequency part of a transformed and quantized macro block. In general, the segments have a uniform size for all frequencies.

The inventive encoding approach does not require any adaptation at the decoder side. A conventional decoder as defined in current video encoding standards can be employed in the usual manner. The decoder is reconstructing the original image based on the received transform coefficients, irrespective of the application of a further "reduction" stage of transform coefficients in accordance with the present invention.

The application of the present invention at the encoder side has the following effects on the reconstructed picture at the decoder side for a predictive coding scheme. The picture content represented by a frequency segment is decoded in a conventional manner via a predication signal and a prediction error signal. The available prediction signal for the respective segment is corrected by adding the prediction error signal of the corresponding segment. The frequency segments which have not been maintained and set to zero do not provide any prediction error at the decoder side which can be added to the prediction signal. Accordingly, the resulting picture content for those segments corresponds to the prediction signal.

The present invention does apply the same frequency selection scheme to all macro blocks, but alternates the selected frequency in predetermined intervals. For this purpose, the selected segment 322 (shown in Fig. 5) or the selected transform coefficient can be changed between succeeding frames or macro blocks. In this manner, different picture frequencies are updated in different macro blocks or frames such that the human visual system will receive updates of all involved frequency portions over a predetermined period of time.

By only selecting a single or a small number of segments / transform coefficients, the coding efficiency is considerably increased. In contrast to conventional approaches, only individual frequencies are selected while the remaining frequencies are suppressed.

To minimize the effect of the reduced number of transmitted frequencies on the perceived image quality, the selection process is altered in predefined intervals, preferably on a block or image basis.

In accordance with the preferred embodiment, the selection process is performed in accordance with a predefined selection scheme. The selection scheme defines a sequence of frequency components (i.e. transform coefficients or segments), which are selected in consecutive manner. Accordingly, the segments or transform coefficients are selected in accordance with a predefined order. The predefined order defines the sequence of individual transform coefficient positions or segment numbers (as illustrated in Fig. 5 by the numbers 1 to 12).

In a preferred implementation, the predefined order is continuously repeated. Alternatively, particular segments (i.e. image frequencies) are repeatedly selected with a more frequent occurrence. In this manner, particular frequencies are given a higher priority.

According to a preferred embodiment, the alteration is only applied to segments 322, 325 containing the higher image frequencies, while the low frequency component 321 is transmitted for all of the macro blocks.

As shown in Fig. 5, only a single high frequency segment 322 is selected. Alternatively, a larger number of high frequency segments (or transform coefficients) can be selected, for instance a number of two, three, four, five, etc. segments or transform coefficients.

According to an alternative embodiment of the present invention, the number of segments or transform coefficients maintained per block is set adaptively. The adaptation may for instance be set in accordance with the picture content inside of the current block. The individual frequency characteristic of the current macro block may be employed for this purpose.

The individual segments or transform coefficients to be selected may be set adaptively. The selection can be set adaptively to the frequency characteristics of the current block. In accordance with a simple implementation, a threshold value is employed. All transform coefficients exceeding the threshold value are maintained.

This approach can also be performed on a segment-basis by comparing, for instance, an average value of the transform coefficients inside of a segment, or using another representative value for the frequency component of the current segment, e.g. the value of the largest transform coefficient.

The picture content of a macro block can also control the proportion of high and low frequency segments to be maintained. Further, the size of segments employed for high frequencies and low frequencies can be set adaptively.

While the above description mainly refers to square segments, the form of the segments may differ as well. For instance, rectangular segments may be used. The size and form of segments may be set adaptively as described above. Individual segments may be combined to form larger segments (e.g. segment 321 in Fig. 5).

The underlying principle of using a "frequency selective update" of the present invention is not limited to the described hybrid encoding systems. The present invention can be applied to all kinds of encoders employing quantized transform coefficients.

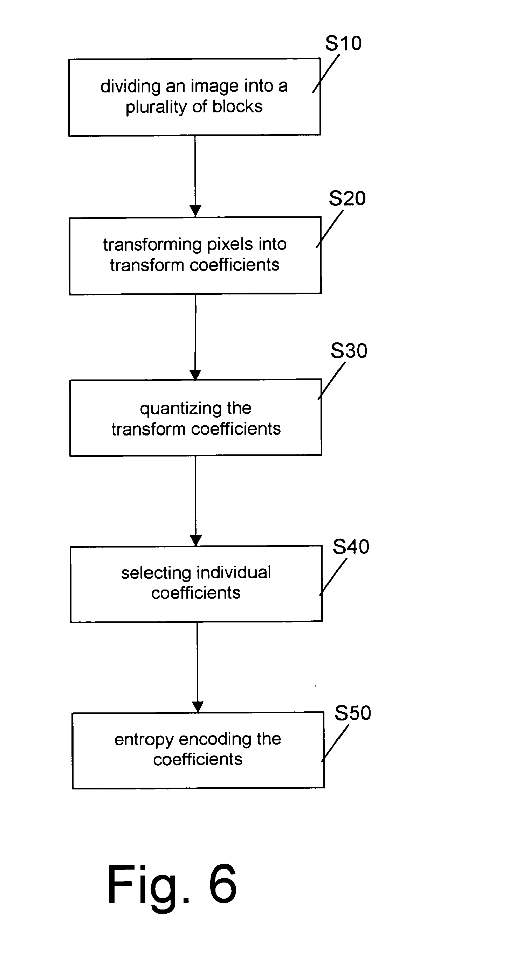

The operation of the encoder in accordance with the present invention is described next in connection with the example in Fig. 6.

Fig. 6 is a flowchart illustrating the operation of an encoder in accordance with the present invention. After dividing a video image to be encoded into a plurality of blocks (step S10), the pixels of a block are transformed into a block of transform coefficients (step S20). Alternatively, image areas of a different size or the undivided image is supplied to the transformation stage. Preferably, an orthogonal transform like a DCT is applied.

The transform coefficients may be quantized as indicated by step S30. It is to be noted that the quantization of the transform coefficients is not required for the application of the present invention.

From the transform coefficients, at least one of the transform coefficients is selected (step S40). As described in connection with Fig. 5, the selection process may be performed in accordance with different embodiments. In particular, the selection process is varied in accordance with a predefined frequency sequence, and - preferably - based on segments which group neighbouring transform coefficients of similar frequencies.

Only the selected transform coefficients are maintained for each macro block (step S50) and will contribute to the block reconstruction at the decoder side while the remaining coefficients are set to zero, i.e. their contribution is discarded. The encoding result is transmitted to a decoder or is stored on a storage medium.

Summarizing, the present invention relates to an improved encoding of video data. After transform of the pixel data into the frequency domain, only individual frequencies are selected by suppressing the remaining transform coefficients, wherein the selected frequency is altered in accordance with a predefined rule. By selecting only individual non-zero transform coefficients, the coding efficiency can be increased. By varying the selected frequency the perceived image quality of the reconstructed image at the decoder side is not adversely affected.

## Claims

1. A method for encoding video data, including the step of transforming (S20) the pixels of an image area into transform coefficients in the frequency domain
**characterized by** the step of
selecting (S40) at least one transform coefficient of a predetermined frequency by suppressing the remaining transform coefficients, said predetermined frequency is altered in predefined intervals.

2. A method according to claim 1, wherein the transform coefficients of the image area are divided into a plurality of segments (320), each segment (320) including a plural transform coefficients.

3. A method according to claim 1 or 2, wherein said selection step (S40) selects a predefined number of predetermined frequencies (321, 322) of a transformed image area.

4. A method according to claim 3, wherein said selection step (S40) selects a single transform coefficient or segment (321, 322).

5. A method according to any of claims 1 to 4, wherein said predetermined frequency is altered from frame to frame.

6. A method according to any of claims 1 to 4, wherein said predetermined frequency is altered from image area to image area.

7. A method according to any of claims 1 to 6, wherein said predetermined frequency is altered in accordance with a predefined sequence of frequencies.

8. A method according to claim 7, wherein said predefined sequence includes all frequencies in a predefined order.

9. A method according to claim 7, wherein said predefined sequence includes a subset of all frequencies in a predefined order.

10. A method according to any of claims 1 to 9, wherein said predetermined frequency is set adaptively.

11. A method according to claim 10, wherein said predetermined frequency is set adaptively to the image content of the image area.

12. A method according to claim 10 or 11, wherein said predetermined frequency is set adaptively to the presence or size of non-zero transform coefficients.

13. A method according to claim 10, wherein the proportion of predetermined low frequencies (321) and high frequencies (322) is set adaptively depending on the frequency characteristic of the transform coefficients of the respective image area.

14. A method according to claim 10, wherein only a frequency exceeding a predefined threshold value is set as said predetermined frequency.

15. A method according to claim 14, wherein said threshold value being set adaptively.

16. A method according to any of claims 2 to 15, wherein said segments (320) including a uniform number of transform coefficients.

17. A method according to any of claims 2 to 15, wherein said segments (320) including a different number of transform coefficients.

18. A method according to claim 17, wherein the segment (321) including the transform coefficients relating to the lowest frequencies having a larger number of transform coefficients than the other segments (322).

19. A method according to any of claims 1 to 18, wherein said image area being a block of pixels, wherein an input image being divided into a plurality of block of a uniform size.

20. An encoding apparatus for encoding video data of an input image, including a transformer (120) for transforming the pixels of an image area into transform coefficients in the frequency domain
**characterized by**
a selector (300) for selecting at least one transform coefficient of a predetermined frequency by suppressing the remaining transform coefficients, said predetermined frequency being altered in predefined intervals.

21. An encoding apparatus according to claim 20, wherein the transform coefficients of the image area are divided into a plurality of segments (320), each segment (320) including a plural transform coefficients.

22. An encoding apparatus according to claim 20 or 21, wherein said selector (300) selecting a predefined number of predetermined frequencies (321, 322) of a transformed image area.

23. An encoding apparatus according to any of claims 20 to 22, wherein said selector (300) selecting a single transform coefficient or segment (321, 322).

24. An encoding apparatus according to claim 23, wherein said predetermined frequency is altered from frame to frame.

25. An encoding apparatus according to claim 23, wherein said predetermined frequency is altered from image area to image area.

26. An encoding apparatus according to claim 24 or 25, wherein said predetermined frequency is altered in accordance with a predefined sequence of frequencies.

27. An encoding apparatus according to claim 26, wherein said predefined sequence includes all frequencies in a predefined order.

28. An encoding apparatus according to claim 26, wherein said predefined sequence includes a subset of all frequencies in a predefined order.

29. An encoding apparatus according to any of claims 20 to 28, wherein said predefined frequency is set adaptively.

30. An encoding apparatus according to claim 29, wherein said predetermined frequency is set adaptively to the image content of the image area.

31. An encoding apparatus according to claim 29 or 30, wherein said predetermined frequency is set adaptively to the presence or size of non-zero transform coefficients.

32. An encoding apparatus according to claim 29, wherein the proportion of predetermined low frequencies (321) and high frequencies (322) is set adaptively depending on the frequency characteristic of the transform coefficients of the respective image area.

33. An encoding apparatus according to claim 29, wherein only a frequency exceeding a predefined threshold value is set as said predetermined frequency.

34. An encoding apparatus according to claim 33, wherein said threshold value being set adaptively.

35. An encoding apparatus according to any of claims 21 to 34, wherein said segments (320) including a uniform number of transform coefficients.

36. An encoding apparatus according to any of claims 21 to 34, wherein said segments (320) including a different number of transform coefficients.

37. An encoding apparatus according to claim 36, wherein the segment (321) including the transform coefficients relating to the lowest frequencies having a larger number of transform coefficients than the other segments (322).

38. An encoding apparatus according to any of claims 20 to 37, wherein said image area being a block of pixels, wherein an input image being divided into a plurality of block of a uniform size.

39. A computer program product comprising a computer readable medium having computer readable program code embodied thereon, the program code being adapted to carry out all steps of claim 1.
